# EUROPEAN PATENT APPLICATION

(11) **EP 4 734 478 A1**
(43) Date of publication of application: **29.04.2026**
(21) Application number: 24843301.3
(22) Date of filing: 03.06.2024
(51) Int. Cl.: H04L 65/1104, H04L 65/80, H04L 43/0829, H04B 17/336, H04B 17/318, H04L 65/1016

(54) **ELECTRONIC DEVICE FOR PERFORMING CALL AND OPERATION METHOD THEREFOR**

(30) Priority: 14.07.2023 KR 20230091917
(71) Applicant: Samsung Electronics Co., Ltd., Suwon-si, Gyeonggi-do 16677 (KR)
(72) Inventor: NGO, Duy Bach, Bac Ninh province, 220000 (VN); NGUYEN, Thi Huyen, Bac Ninh province, 220000 (VN); NGUYEN, Van Thinh, Bac Ninh province, 220000 (VN)
(74) Representative: Gulde & Partner
(86) International application number: PCT/KR2024/007577
(87) International publication number: WO 2025/018580

(57) **Abstract**

An electronic device according to an embodiment may comprise communication circuitry and at least one processor operatively connected to the communication circuitry. The at least one processor may be configured to identify a first parameter of a received signal associated with a call on the basis of establishing a call connection with an external electronic device through the communication circuitry. The at least one processor may be configured to, on the basis of identifying that the first parameter has a value less than a first value, transmit, through the communication circuitry, a first record flag for causing the external electronic device to store input audio. The at least one processor may be configured to store input audio while performing the call. The at least one processor may be configured to identify first information from the stored input audio on the basis of receiving a request for information included in at least one mute interval from the external electronic device. The at least one processor may be configured to transmit a response including the first information to the external electronic device through the communication circuitry.

## Description

### [Technical Field]

The disclosure relates to an electronic device that performs a call, and an operation method thereof.

### [Background Art]

Wireless communication systems have been developed to support higher data transmission rates in order to meet wireless data traffic demands which have been continuously increased. To improve network access and data transmission rates, electronic devices may transmit or receive signals in the 4G frequency, the 5G sub6 frequency, or 3 GHz to 5 GHz frequency range.

As development is progressed, the wireless communication system is capable of providing Internet protocol (IP)-based multimedia services (e.g., voice, video, and data) to electronic devices. For example, the electronic device may receive voice, video, or other media services via an IP multimedia subsystem (IMS) network. The wireless communication system may control the quality of multimedia services by using various service quality indices (e.g., delay or throughput) in order to provide high-quality IP-based multimedia services to electronic devices. For example, the wireless communication system may provide a standard (e.g., bearer or real-time transport protocol (RTP)) for improving IP-based call quality.

A user equipment (UE) may establish a radio resource control (RRC) connection with a network. The UE may register with an IMS core via the RRC connection. The UE may establish a call with an external electronic device via the IMS core, and may transmit or receive a real-time transport protocol (RTP) packet including voice to or from the external electronic device.

### [Detailed Description of the Invention]

### [Technical Solution]

According to an embodiment, an electronic device may include communication circuit and at least one processor operatively connected to the communication circuitry. The at least one processor may be configured to identify a first parameter of a received signal associated with a call based on establishing a call connection with an external electronic device via the communication circuitry. Based on identifying that the first parameter is less than a first value, the at least one processor may be configured to transmit, via the communication circuitry, a first record flag that causes the external electronic device to store an input audio. The at least one processor may be configured to store an input audio while performing the call. Based on receiving a request for information included in at least one mute interval from the external electronic device, the at least one processor may be configured to identify first information from the stored the input audio. The at least one processor may be configured to transmit a response including the first information to the external electronic device via the communication circuitry.

According to an embodiment, an operation method of an electronic device may include an operation of identifying a first parameter of a received signal associated with a call based on establishing a call connection with an external electronic device via communication circuitry of the electronic device. According to an embodiment, the operation method of the electronic device may include an operation of transmitting, via the communication circuitry, a first record flag that causes the external electronic device to store an input audio based on identifying that the first parameter is less than a first value. According to an embodiment, the operation method of the electronic device may include an operation of storing an input audio while performing the call. According to an embodiment, the operation method of the electronic device may include an operation of identifying first information from the stored the input audio based on receiving a request for information included in at least one mute interval from the external electronic device. According to an embodiment, the operation method of the electronic device may include an operation of transmitting a response including the first information to the external electronic device via the communication circuitry.

According to an embodiment, in a computer-readable storage medium storing at least one instruction, the at least one instruction, when executed by at least one processor of an electronic device, may cause the electronic device to perform at least one operation. The at least one operation may include an operation of identifying a first parameter of a received signal associated with a call based on establishing a call connection with an external electronic device via the communication circuitry of the electronic device. The at least one operation may include an operation of transmitting, via the communication circuitry, a first record flag that causes the external electronic device to store an input audio based on identifying that the first parameter is less than a first value. The at least one operation may include an operation of storing an input audio while performing the call. The at least one operation may include an operation of identifying first information from the stored input audio based on receiving a request for information included in at least one mute interval from the external electronic device. The at least one operation may include an operation of transmitting a response including the first information to the external electronic device via the communication circuitry.

According to an embodiment, an electronic device may include communication circuitry and at least one processor operatively connected to the communication circuitry. The at least one processor may be configured to identify a plurality of packets received while performing a call with an external electronic device based on establishing a call connection with the external electronic device via the communication circuitry. The at least one processor may be configured to identify at least one mute interval based on identifying at least one packet loss among the plurality of packets. The at least one processor may be configured to store an input audio based on receiving a first record flag from the external electronic device while performing the call. The at least one processor may be configured to transmit a request for information included in the at least one mute interval to the external electronic device via the communication circuitry based on termination of the call after the first record flag is received. The at least one processor may be configured to receive a response including first information corresponding to the at least one mute interval from the external electronic device.

According to an embodiment, an operation method of an electronic device may include an operation of identifying a plurality of packets received while performing a call with an external electronic device based on establishing a call connection with the external electronic device via the communication circuitry of the electronic device. The operation method of the electronic device may include an operation of identifying at least one mute interval based on identifying at least one packet loss among the plurality of packets. The operation method of the electronic device may include an operation of storing an input audio based on receiving a first record flag from the external electronic device while performing the call. The operation method of the electronic device may include an operation of transmitting a request for information included in the at least one mute interval to the external electronic device via the communication circuitry based on termination of the call after the first record flag is received. The operation method of the electronic device may include an operation of receiving a response including first information corresponding to the at least one mute interval from the external electronic device.

According to an embodiment, in a computer-readable storage medium storing at least one instruction, the at least one instruction, when executed by at least one processor of an electronic device, may cause the electronic device to perform at least one operation. The at least one operation may include an operation of identifying a plurality of packets received while performing a call with an external electronic device based on establishing a call connection with the external electronic device via the communication circuitry of the electronic device. The at least one operation may include an operation of identifying at least one mute interval based on identifying at least one packet loss among the plurality of packets. The at least one operation may include an operation of storing an input audio based on receiving a first record flag from the external electronic device while performing the call. The at least one operation may include an operation of transmitting a request for information included in the at least one mute interval to the external electronic device via the communication circuitry based on termination of the call after the first record flag is received. The at least one operation may include an operation of receiving a response including first information corresponding to the at least one mute interval from the external electronic device.

### [Brief Description of Drawings]

FIG. 1 is a block diagram illustrating an electronic device in a network environment according to an embodiment.
FIG. 2A is a block diagram of an electronic device for supporting legacy network communication and 5G network communication according to an embodiment.
FIG. 2B is a block diagram of an electronic device for supporting legacy network communication and 5G network communication according to an embodiment.
FIG. 3 is a diagram illustrating a communication system including an IMS network according to an embodiment.
FIG. 4 is a flowchart illustrating an operation method of an electronic device according to an embodiment.
FIG. 5A and FIG. 5B are diagrams illustrating operation of an electronic device according to an embodiment.
FIG. 6 is a flowchart illustrating an operation method of an electronic device according to an embodiment.
FIG. 7 is a flowchart illustrating an operation method of an electronic device according to an embodiment.
FIG. 8 is a flowchart illustrating an operation method of an electronic device according to an embodiment.
FIG. 9 is a flowchart illustrating an operation method of an electronic device according to an embodiment.
FIG. 10 is a flowchart illustrating an operation method of an electronic device according to an embodiment.

### [Mode for Carrying out the Invention]

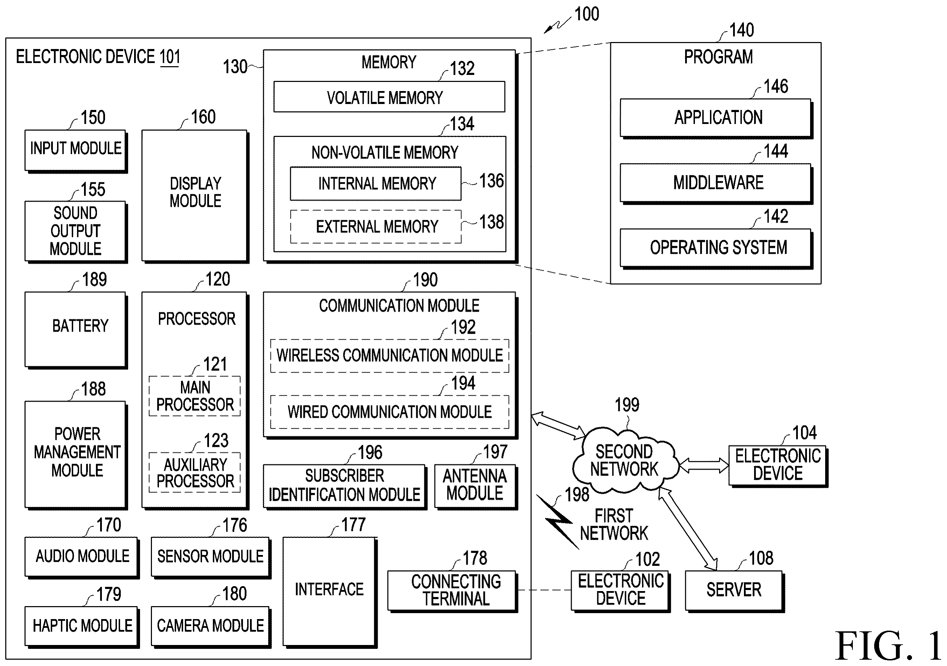

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

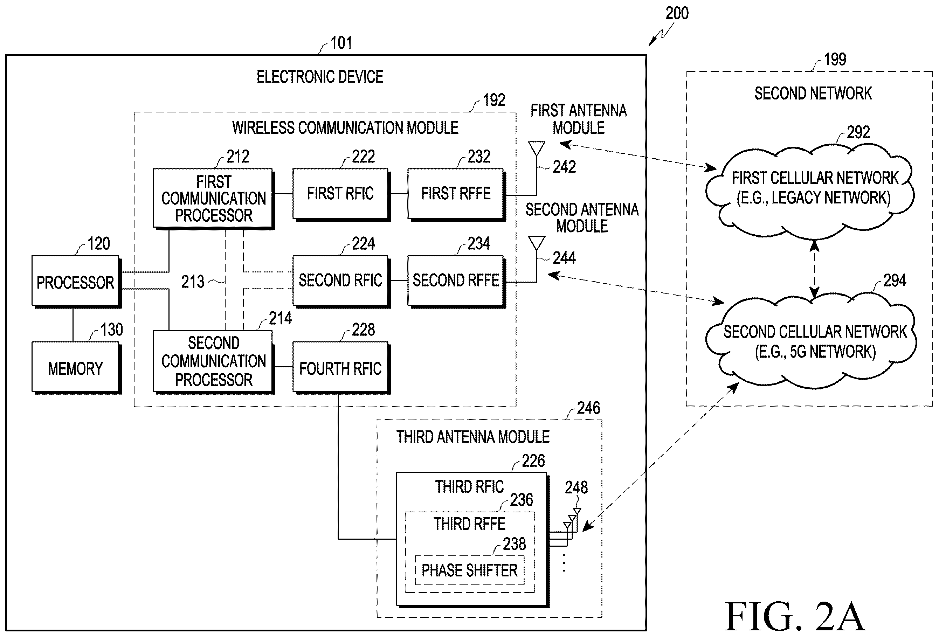

FIG. 2A is a block diagram of an electronic device for supporting legacy network communication and 5G network communication according to an embodiment. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include the processor 120 and the memory 130. The second network 199 may include a first cellular network 292 and a second cellular network 294. According to another embodiment, the electronic device 101 may further include at least one component among the components illustrated in FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may be at least a portion of the radio communication module 192. According to an embodiment, the fourth RFIC 228 may be omitted, or may be included as a portion of the third RFIC 226.

According to an embodiment, the first communication processor 212 may establish a communication channel of a band to be used for wireless communication with the first cellular network 292, and may support legacy network communication via the established communication channel. According to an embodiment, the first cellular network may be a legacy network including a 2G, 3G, 4G, or long term evolution (LTE) network. The second communication processor 214 may establish a communication channel corresponding to a designated band (e.g., approximately 6GHz to 60GHz) among bands to be used for wireless communication with the second cellular network 294, and may support 5G network communication via the established communication channel. According to an embodiment, the second cellular network 294 may be a 5G network defined in 3GPP. According to an embodiment, the first communication processor 212 or the second communication processor 214 may establish a communication channel corresponding to another designated band (e.g., 6GHz or less) among bands to be used for wireless communication with the second cellular network 294, and may support 5G network communication via the established communication channel.

According to an embodiment, the first communication processor 212 may transmit or receive data to or from the second communication processor 214. For example, data which has been classified to be transmitted via the second cellular network 294 may be changed to be transmitted via the first cellular network 292. In this instance, the first communication processor 212 may receive transmission data from the second communication processor 214. For example, the first communication processor 212 may transmit or receive data to or from the second communication processor 214 via an inter-processor interface 213. The inter-processor interface 213 may be embodied as, for example, a universal asynchronous receiver/transmitter (UART) (e.g., a high speed-UART (HS-UART)) or a peripheral component interconnect bus express (PCIe) interface, but the type of interface is not limited. Alternatively, the first communication processor 212 and the second communication processor 214, for example, may exchange control information and packet data information by using shared memory. The first communication processor 212 may transmit or receive various types of information such as sensing information, information on an output strength, and resource block (RB) allocation information, to or from the second communication processor 214.

Depending on the implementation, the first communication processor 212 may not be directly connected to the second communication processor 214. In this instance, the first communication processor 212 may transmit or receive data to or from the second communication processor 214 via the processor 120 (e.g., application processor). For example, the first communication processor 212 and the second communication processor 214 may transmit or receive data to or from the processor 120 (e.g., application processor) via an HS-UART interface or a PCIe interface, but the type of interface is not limited. Alternatively, the first communication processor 212 and the second communication processor 214 may exchange control information and packet data information with the processor 120 (e.g., application processor) using shared memory.

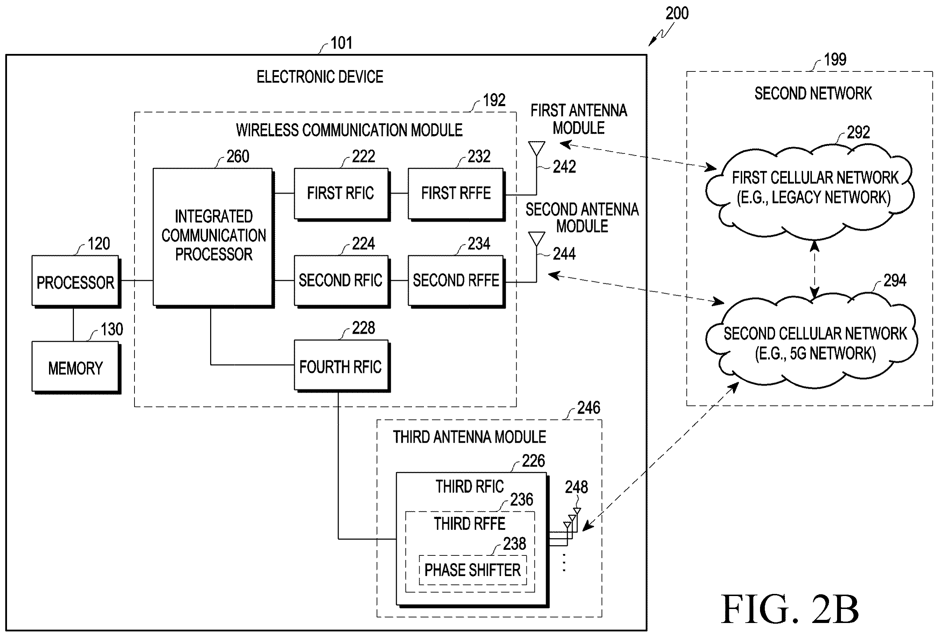

According to an embodiment, the first communication processor 212 and the second communication processor 214 may be implemented in a single chip or a single package. According to an embodiment, the first communication processor 212 or the second communication processor 214 may be embodied in a single chip or a single package, together with the processor 120, the sub-processor 123, or the communication module 190. For example, as illustrated in FIG. 2B, a communication processor 440 may support all functions for communication with the first cellular network 292 and the second cellular network 294.

According to an embodiment, in the case of transmission, the first RFIC 222 may convert a baseband signal generated by the first communication processor 212 to a radio frequency (RF) signal in the range of approximately 700MHz to 3GHz, which is used for the first cellular network 292 (e.g., legacy network). In the case of reception, an RF signal is obtained from the first network 292 (e.g., legacy network) via an antenna (e.g., first antenna module 242), and may be preprocessed via an RFFE (e.g., first RFFE 232). The first RFIC 222 may convert the preprocessed RF signal to a baseband signal so that the signal is processed by the first communication processor 212.

According to an embodiment, in the case of transmission, the second RFIC 224 may convert a baseband signal generated by the first communication processor 212 or the second communication processor 214 to an RF signal (hereinafter, 5G Sub6 RF signal) in the Sub6 band (e.g., approximately 6GHz or less) used in the second cellular network 294 (e.g., 5G network). In the case of reception, a 5G Sub6 RF signal is obtained from the second cellular network 294 (e.g., 5G network) via an antenna (e.g., second antenna module 244), and may be preprocessed by an RFFE (e.g., second RFFE 234). The second RFIC 224 may convert the preprocessed 5G Sub6 RF signal to a baseband signal so that the signal is processed by a corresponding communication processor among the first communication processor 212 or the second communication processor 214.

The third RFIC 226 may convert a baseband signal generated by the second communication processor 214 to an RF signal (hereinafter, 5G Above6 RF signal) of a 5G Above6 band (e.g., approximately 6GHz to 60GHz) to be used for the second cellular network 294 (e.g., 5G network). In the case of reception, a 5G Above6 RF signal may be obtained from the second cellular network 294 (e.g., 5G network) via an antenna (e.g., antenna 248), and may be preprocessed by the third RFFE 236. The third RFIC 226 may convert the preprocessed 5G Above6 RF signal to a baseband signal so that the signal is processed by the second communication processor 214. According to an embodiment, the third RFFE 236 may be embodied as a part of the third RFIC 226.

According to an embodiment, the electronic device 101 may include the fourth RFIC 228, separately from or, as a part of, the third RFIC 226. The fourth RFIC 228 may convert a baseband signal generated by the second communication processor 214 to an RF signal (hereinafter, IF signal) in an intermediate frequency band (e.g., approximately 9GHz to 11 GHz), and may transfer the IF signal to the third RFIC 226. The third RFIC 226 may convert the IF signal to a 5G Above6 RF signal. In the case of reception, a 5G Above6 RF signal may be received from the second cellular network 294 (e.g., 5G network) via an antenna (e.g., antenna 248), and may be converted into an IF signal by the third RFIC 226. The fourth RFIC 228 may convert an IF signal to a baseband signal so that the second communication processor 214 processes the signal.

According to an embodiment, the first RFIC 222 and the second RFIC 224 may be embodied as at least a portion of a single chip or single package. According to an embodiment, if the first RFIC 222 and the second RFIC 224 are embodied as a single chip or a single package in FIG. 2A or FIG. 2B, they may be implemented as an integrated RFIC. In this instance, the integrated RFIC may be connected to the first RFFE 232 and the second RFFE 234, may convert a baseband signal to a signal in a band supported by the first RFFE 232 and/or the second RFFE 234, and may transmit the converted signal to one of the first RFFE 232 and the second RFFE 234. According to an embodiment, the first RFFE 232 and the second RFFE 234 may be embodied as at least a portion of a single chip or single package. According to an embodiment, at least one antenna module of the first antenna module 242 or the second antenna module 244 may be omitted, or may be combined with another antenna module, so as to process RF signals in a plurality of bands.

According to an embodiment, the third RFIC 226 and the antenna 248 may be disposed on the same substrate, and may form the third antenna module 246. For example, the wireless communication module 192 or the processor 120 may be disposed on a first substrate (e.g., main PCB). In this instance, the third RFIC 226 is disposed in a portion (e.g., lower part) of a second substrate (e.g., sub PCB) different from the first substrate, and the antenna 248 is disposed in another portion (e.g., upper part), so that the third antenna module 246 may be configured. When the third RFIC 226 and the antenna 248 are disposed on the same substrate, the length of a transmission line therebetween may be reduced. For example, this may reduce the loss (e.g., diminution) of a high-frequency band signal (e.g., approximately 6GHz to 60GHz) used for 5G network communication, the loss being caused by a transmission line. Accordingly, the electronic device 101 may improve the quality or speed of communication with the second network 294 (e.g., 5G network).

According to an embodiment, the antenna 248 may be configured as an antenna array including a plurality of antenna elements which may be used for beamforming. For example, the third RFIC 226 may include a plurality of phase shifters 238 corresponding to a plurality of antenna elements, as a portion of the third RFFE 236. In the case of transmission, each of the plurality of phase shifters 238 may shift the phase of a 5G Above6 RF signal to be transmitted to the outside of the electronic device 101 (e.g., a base station of the 5G network) via a corresponding antenna element. In the case of reception, each of the plurality of phase shifters 238 may shift the phase of a 5G Above6 RF signal received from the outside via a corresponding antenna element to the same or substantially the same phase. This may facilitate beamforming-based transmission or reception between the electronic device 101 and the outside.

According to an embodiment, the second cellular network 294 (e.g., 5G network) may operate independently (e.g., stand-alone (SA)) from the first cellular network 292 (e.g., legacy network), or may operate by being connected thereto (e.g., non-standalone (NSA)). For example, in the 5G network, only an access network (e.g., 5G radio access network (RAN) or next generation RAN (NG RAN)) may exist, and a core network (e.g., next generation core (NGC)) may not exist. The electronic device 101 may access the access network of the 5G network, and may access an external network (e.g., the Internet) under the control of the core network (e.g., evolved packed core (EPC)) of the legacy network. Protocol information (e.g., LTE protocol information) for communication with the legacy network or protocol information (e.g., new radio (NR) protocol information) for communication with the 5G network may be stored in the memory 130, and may be accessed by another component (e.g., processor 120, first communication processor 212, or second communication processor 214).

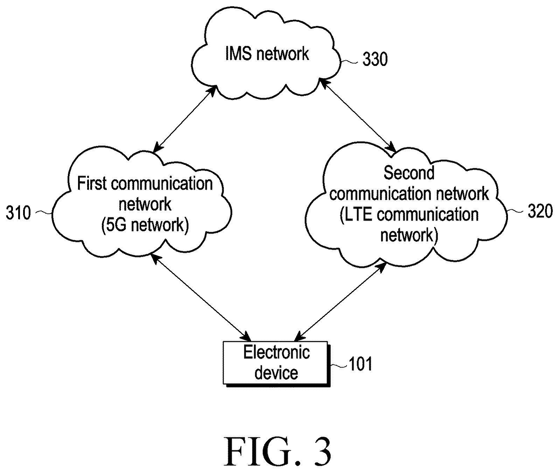

FIG. 3 is a diagram illustrating a communication system including an IMS network according to an embodiment.

According to an embodiment, the electronic device 101 may access a first communication network 310 (e.g., 5G communication network) or a second communication network 320 (e.g., LTE communication network), separately or simultaneously. According to an embodiment, the electronic device 101 may access an IMS network 330 via the first communication network 310 or may access the IMS network 330 via the second communication network 320. Each of the first communication network 310 and the second communication network 320 may include an (R)AN and/or core network. Based on the first communication network 310 and the second communication network 320, the electronic device 101 may provide a communication service (e.g., voice call or voice call service) with an external electronic device (e.g., electronic device 102, electronic device 104, and/or server 108).

According to an embodiment, the electronic device 101 may modulate or demodulate a signal for communicating with at least one communication network (e.g., first communication network 310) via a communication circuit (e.g., communication module 190). For example, the electronic device 101 may be connected to at least one communication network (telecommunications network, e.g., communication network) via wired or wireless communication, and may communicate with another electronic device. The electronic device 101 may control communication with at least one communication network or at least one IP service network. According to an embodiment, the electronic device 101 may include hardware including at least one processor and software for controlling the same. The electronic device 101 may receive a communication service via the first communication network 310, the second communication network 320, or the IMS network 330.

According to an embodiment, the first communication network 310 may include a gNB and a 5GC. The gNB may be a device (e.g., base station) that provides a wireless interface (or wireless connection) between at least one user device and an NR network. For example, the gNB may control a wireless connection of the electronic device 101 and may control radio resources (e.g., frequency) allocated to the wireless connection. The 5GC may manage a connection to at least one electronic device 101 connected via the gNB. For example, the 5GC may provide authentication for the electronic device 101 when the electronic device 101 accesses a 5G communication network, or may provide a communication service by tracking or managing mobility of the electronic device 101. The 5GC may route a packet in communication with the 5G communication network and an external communication network (e.g., Internet or IMS network 330). The electronic device 101 may transmit or receive an RTP packet including voice information to or from an external electronic device via, for example, the gNB, the 5GC, and the IMS network 430. A call based on the 5G communication network may be referred to as a voice over NR (VoNR).

According to an embodiment, the second communication network 320 may include an evolved node B (eNB) and an evolved packet core (EPC). The eNB may be a device (e.g., base station) that provides a wireless interface (or wireless connection) between at least one user device and an LTE network. For example, the eNB may control a wireless connection of the electronic device 101 and may control radio resources (e.g., frequency) allocated to the wireless connection. The EPC may manage a connection to at least one electronic device 101 connected via the eNB. For example, the EPC may provide authentication for the electronic device 101 when the electronic device 101 accesses the LTE communication network, or may provide a communication service by tracking or managing mobility of the electronic device 101. The EPC may include a serving gateway (S-GW) and a public data network gateway (PGW). For example, the EPC may route a packet in communication with the LTE communication network and an external communication network (e.g., Internet or IMS network 330), may provide a firewall, or may allocate an address (e.g., IP address) to at least one user device. The electronic device 101 may transmit or receive an RTP packet including voice information to or from an external electronic device via, for example, the eNB, the EPC, and the IMS network 430. A call based on the LTE communication network may be referred to as a voice over LTE (VoLTE).

According to an embodiment, the IMS network 330 may include entities such as a call session control function (CSCF) and an application server (AS). For example, the IMS network 330 may be an IP service network, and may provide an IP-based multimedia service to a subscriber. The CSCF, for example, may include at least one from among a proxy call session control function (P-CSCF), a serving call session control function (S-CSCF), or an Interrogating call session control function (I-CSCF). For example, the CSCF may register the electronic device 101 with the IMS network 330 in response to a registration request from the electronic device 101. The CSCF may provide a function related to a call connection of the IMS network 330. The AS is a device for supporting a service provided via the IMS network 330, and may include, for example, a telephony application server (TAS) or a voice call continuity server (VCC server). The TAS may provide a multimedia value-added service (e.g., caller identification, ringtone, or the like) to the at least one electronic device 101. The VCC server may provide, to at least one user device, seamless handover between heterogenous networks (e.g., CDMA network and IMS network).

According to an embodiment, the electronic device 101 may register with the IMS network 330 via the first communication network 310 or the second communication network 320. For example, the electronic device 101 may transmit a registration request (e.g., attach) to the first communication network 310 or the second communication network 320. In response to the registration request, the first communication network 310 or the second communication network 320 may allocate at least one address (e.g., IP address) to the electronic device 101. The electronic device 101 may transmit the registration request (e.g., session initiation protocol (SIP) register) to the IMS network 330 by using at least one address. In response to the registration request, the IMS network 330 may register the electronic device 101 with the IMS network 330 and may provide a service.

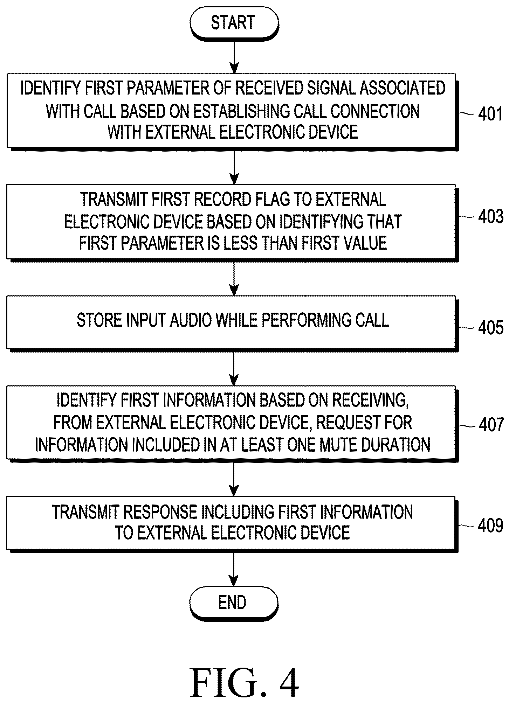

FIG. 4 is a flowchart illustrating an operation method of an electronic device according to an embodiment.

According to an embodiment, the electronic device 101 (e.g., at least one of the processor 120, the first communication processor 212, the second communication processor 214, or the integrated communication processor 260) may identify a first parameter of a received signal associated with a call (e.g., VoNR or VoLTE) based on establishing a call connection with an external electronic device (e.g., at least one of the electronic device 102, the electronic device 104, or the server 108) in operation 401. According to an embodiment, the electronic device 101 may access an external communication network (e.g., Internet and/or IMS network 330) via a communication network (e.g., first communication network 310 and/or second communication network 320). For example, based on accessing the IMS network 330, the electronic device 101 may establish a call connection with the external electronic device via a communication circuit (e.g., communication module 190).Based on the call connection established with the external electronic device, the electronic device 101 may perform a call with the external electronic device. The electronic device 101 may receive a signal associated with the call via the communication network. The electronic device 101 may identify a first parameter of the received signal associated with the call. According to an embodiment, the first parameter may include at least one of a received signal strength indicator (RSSI), a signal-to-interference plus noise ratio (SINR), or reference signals received power (RSRP), which corresponds to the received signal associated with the call, and the first parameter is not limited to the above-described example. Based on identifying the first parameter associated with the received signal, the electronic device 101 may identify a condition of an electric field of the electronic device 101. According to an embodiment, based on identifying that a value of the first parameter associated with the received signal is greater than or equal to a first value (or first threshold value), the electronic device 101 may identify that the electronic device 101 is located in a relatively strong electric field. Based on identifying that the first parameter is greater or equal to the first value, the electronic device 101 may identify that the condition of a communication channel established between the electronic device 101 and the communication network is good. According to an embodiment, based on identifying that the value of the first parameter associated with the received signal is less than the first value, the electronic device 101 may identify that the electronic device 101 is located in a relatively weak electric field. Based on identifying that the first parameter is less than the first value, the electronic device 101 may identify that the condition of the communication channel established between the electronic device 101 and the communication network is poor or bad.

According to an embodiment, based on a timer, the electronic device 101 may identify that there is a risk of call mute. For example, the electronic device 101 may initiate a timer after transmitting uplink data (UL data) (or transmission signal (Tx signal)) to the communication network. When a response to the UL data transmission is not received from the communication network until the timer expires, the electronic device 101 may identify a risk of call mute that may occur in a call being performed.

According to an embodiment, based on identifying that the first parameter is less than the first value, the electronic device 101 may transmit a first record flag to the external electronic device in operation 403. Based on identifying that the first parameter is less than the first value, the electronic device 101 may transmit, via a communication circuit (e.g., communication module 190), the first record flag that causes the external electronic device to store input audio. Considering that call mute may occur while performing the call when the first parameter is less than the first value, the electronic device 101 may cause the external electronic device to record the input audio of the external electronic device based on transmitting the first record flag to the external electronic device. According to an embodiment, the first record flag may be referred to as "record flag: enable." According to an embodiment, when the first parameter is less than a second value (or second threshold value), a risk of call mute may be relatively increased. Based on identifying that the first parameter is greater than or equal to the second value and less than the first value, the electronic device 101 may transmit the first record flag to the external electronic device. By transmitting the first record flag before a risk of call mute is relatively increased, the electronic device 101 may cause the external electronic device to perform call recording before call mute occurs. According to an embodiment, the call mute may be a phenomenon in which at least a portion of the content of a call is lost due to the quality of the call that the electronic device 101 is performing is bad. According to an embodiment, the content of the call that is lost due to the call mute may be referred to as "missing voice."

Based on identifying that the first parameter is greater than or equal to the first value, the electronic device 101 may transmit, via the communication circuit (e.g., communication module 190), a second record flag that causes the external electronic device to stop storing input audio. The second record flag may be referred to as "record flag: disable." Given that a risk of call mute is relatively low while performing the call when the first parameter is greater than or equal to the first value, the electronic device 101 may cause the external electronic device to stop recording the input audio of the external electronic device. According to an embodiment, when the first parameter is greater than or equal to the first value, a record flag (first record flag or second record flag) may be transmitted to the external electronic device without loss. According to an embodiment, those skilled in the art may easily understand that the electronic device 101 may transmit the first record flag to the external electronic device based on identifying that the first parameter value is decreased to be less than the first value while performing the call after transmitting the second record flag.

According to an embodiment, the electronic device 101 may store input audio while performing the call in operation 405. According to an embodiment, the input audio may include the content of the call input to the electronic device 101. For example, the input audio may include the voice of a user (or a person in possession) of the electronic device 101 that is performing the call. According to an embodiment, the electronic device 101 may identify (or recognize, obtain, or store) the voice via an input module (e.g., input module 150), an audio module (e.g., audio module 170), or an external electronic device connected to the electronic device 101 in a wired or wireless manner. According to an embodiment, the electronic device 101 may store only the voice of the user of the electronic device 101 in consideration of the privacy of another user who uses the call service via the external electronic device. According to an embodiment, those skilled in the art may easily understand that the electronic device 101 may also store the voice of another user who uses the communication service based on a configuration change.

According to an embodiment, as at least a portion of the operation of storing the input audio while performing the call, the electronic device 101 may start storing the input audio based on identifying the first parameter is less than the first value. The electronic device 101 may identify, based on the value of the first parameter, that the electronic device 101 that is performing the call is located in a weak electric field. Taking into account that at least a portion of the voice of the user of the electronic device 101 may not be transmitted to the external electronic device, the electronic device 101 may start storing the input audio based on identifying that the first parameter is less than the first value.

According to an embodiment, as at least a portion of the operation of storing the input audio while performing the call, the electronic device 101 may start storing input audio based on establishing a call connection with the external electronic device. The electronic device 101 may store the input audio from when the call is initiated according to a configuration of an application associate with the call service. Those skilled in the art may easily understand that the electronic device 101 may start storing input audio based on a user input that causes a call connection attempt to the external electronic device.

According to an embodiment, based on storing the input audio, the electronic device 101, in operation 407, may identify first information upon receiving a request for information included in at least one mute interval (mute duration, mute period or mute section) from the external electronic device. According to an embodiment, information related to a time period in which call mute has occurred may be included in the request. According to an embodiment, the electronic device 101 may identify the first information from the stored input audio. For example, the electronic device 101 may identify the first information that satisfies a first condition from at least a portion of audio information corresponding to the at least one mute interval among the stored input audio. The mute interval may be a continuous time period in which call mute occurs. The first condition may include a condition that the first information is data designated as a keyword, and the first condition is not limited thereto. According to an embodiment, the first information may be "meaningful information" in the missing voice that fails to be not transmitted to the external electronic device. For example, the first information may include data associated with a job, a task, a project, technical issues, a time, or a location. Those skilled in the art would easily understand that the first information is not limited to the above-described example, and may be changed according to a confiscation of the electronic device 101. For example, while using the call service, a user (e.g., A) of the electronic device 101 and a user (e.g., B) of the external electronic device may have conversation as shown in Table 1 below.

**[Table 1]**

| |
|---|
| A: Okay, Fosamax, you take one pill on Monday "and one on Thursday." |
| B: I got it. |
| A: Do you use much caffeine? |
| B: No, none. |

According to an embodiment, call mute may occur when a channel condition associated with the call becomes poor while the user A of the electronic device 101 is inputting "and one on Thursday" to the electronic device 101. Since failing to receive information corresponding to the mute interval, the user B of the external electronic device may take only one pill per week. According to an embodiment, based on identifying the first information from the stored input audio, the electronic device 101 may transmit lost information of the content of the call to the external electronic device. Based on receiving the request for the information corresponding to the mute interval from the external electronic device, the electronic device 101 may identify "and one on Thursday" as the first information from the stored input audio. According to an embodiment, based on identifying the first information, the electronic device 101 may transmit a response including the first information to the external electronic device in operation 409. The electronic device 101 may transmit the response including the first information to the external electronic device via a communication circuit (e.g., communication module 190). According to an embodiment, the electronic device 101 may transmit, to the external electronic device, the response including the first information that is provided in at least one of an audio format or a text format. The electronic device 101 may transmit, to the external electronic device, audio data corresponding to a time interval that includes the first information. The electronic device 101 may transmit text data corresponding to the first information to the external electronic device. For example, the electronic device 101 may transmit the response including the first information to the external electronic device by using a short message service (SMS) and/or multimedia message service (MMS).

According to an embodiment, when the electronic device 101 is located in a relatively weak electric field, the electronic device 101 may transmit meaningful information of the missing voice to the external electronic device based on storing input audio corresponding to the content of the call.

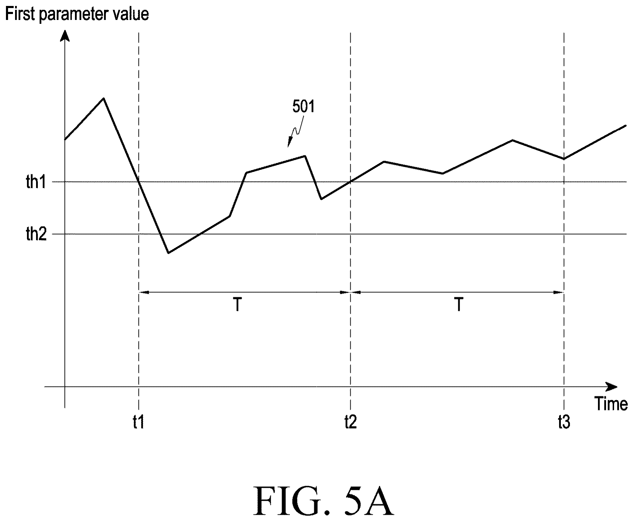

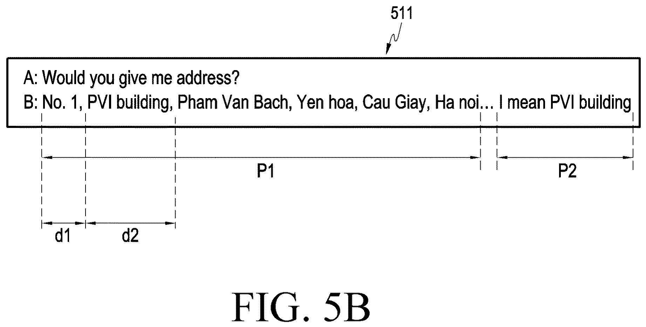

FIG. 5A and FIG. 5B are diagrams illustrating operation of an electronic device according to an embodiment.

According to an embodiment, referring to FIG. 5A, based on monitoring a value of a first parameter while performing a call, the electronic device 101 may transmit a record flag (e.g., first record flag or second record flag) to an external electronic device (e.g., at least one of the electronic device 102, the electronic device 104, or the server 108). According to an embodiment, FIG. 5A illustrates a graph 501 of a first parameter value over time. The electronic device 101 may monitor the value of the first parameter based on a period of T. Based on identifying that the value of the first parameter is less than a first threshold value (th1) at t1, the electronic device 101 may transmit, to the external electronic device, a first record flag that causes the external electronic device to store (or record) at least a portion of the content of a call. Considering that a risk of call mute may be increased when the value of the first parameter is decreased to be less than a second threshold value (th2), the electronic device 101 may transmit the first record flag based on identifying that the value of the first parameter is less than the first threshold value (th1). After a period of T, the electronic device 101 may identify that the value of the first parameter is greater than or equal to the first threshold value (th1) at t2. The electronic device 101 may maintain recording the content of the call based on identifying that the value of the first parameter during a time period from t1 to t2 (or an average value of the first parameters during a period of T) is less than the first threshold value (th1). After a period of T, the electronic device 101 may transmit, to the external electronic device, a second record flag that causes the external electronic device to stop storing (or recording) the content of the call at t3. The electronic device 101 may transmit, to the external electronic device, the second record flag based on identifying that the value of the first parameter during a time period from t2 to t3 (or an average value of the first parameters during a period of T) is greater than or equal to the first threshold value (th1). The electronic device 101 may perform control storing (or recording) of the content of the call by transmitting a record flag to the external electronic device based on monitoring the value of the first parameter (or the condition of the electric field of the electronic device 101).

According to an embodiment, referring to FIG 5B, the electronic device 101 may identify first information corresponding to at least one mute interval. According to an embodiment, based on receiving a request for information corresponding to at least one mute interval from the external electronic device, the electronic device 101 may identify the first information corresponding to the at least one mute interval from the stored input audio. Referring to FIG. 5B, at least a portion 511 of the content of the call between a user (e.g., user A) of the electronic device 101 and a user (e.g., user B) of the external electronic device is illustrated. The electronic device 101 may identify time information of the at least one mute interval included in the request. The electronic device 101 may identify the time information associated with mute interval d1 and mute interval d2. Based on the stored input audio, the electronic device 101 may identify (or call, recognize, or read out) at least a portion 511 of the content of the call. The electronic device 101 may identify "No.1" corresponding to the mute interval d1 as the first information, from data P1 which is data related to an address. According to an embodiment, the electronic device 101 may identify that "PVI building" corresponding to the mute interval d2 is repeated in data P2 in a time interval other than the mute interval. Based on identifying that "PVI building" is different from missing voice, the electronic device 101 may include only data corresponding to "No.1" in a response transmitted to the external electronic device.

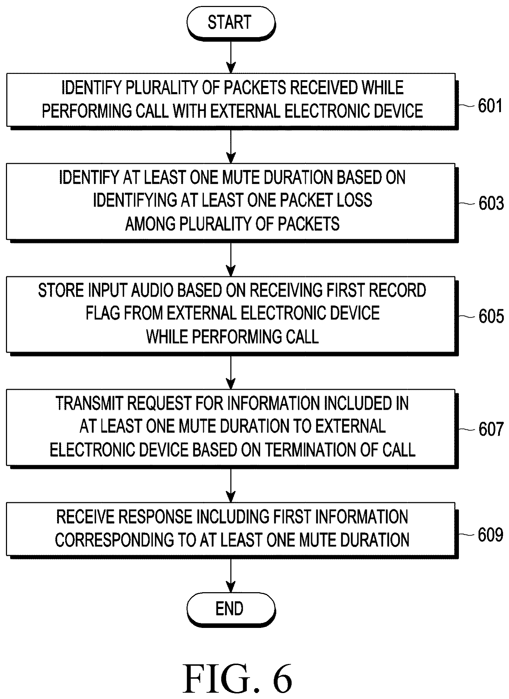

FIG. 6 is a flowchart illustrating an operation method of an electronic device according to an embodiment.

According to an embodiment, the electronic device 101 (e.g., at least one of the processor 120, the first communication processor 212, the second communication processor 214, or the integrated communication processor 260) may identify a plurality of received packets while performing a call (e.g., VoNR or VoLTE) with an external electronic device (e.g., at least one of the electronic device 102, the electronic device 104, or the server 108) in operation 601. According to an embodiment, the electronic device 101 may access an external communication network (e.g., Internet and/or IMS network 330) via a communication network (e.g., first communication network 310 and/or second communication network 320). For example, based on accessing the IMS network 330, via a communication circuit (e.g., communication module 190), the electronic device 101 may establish a call connection with an external electronic device. Based on the call connection established with the external electronic device, the electronic device 101 may perform a call with the external electronic device. The electronic device 101 may transmit or receive a signal associated with the call via the communication network. According to an embodiment, the electronic device 101 may transmit or receive an RTP packet including voice information to or from the external electronic device. Based on identifying a sequence number included in the RTP packet, the electronic device 101 may identify a data sequence corresponding to the plurality of packets.

According to an embodiment, based on identifying the plurality of received packets, the electronic device 101, in operation 603, may identify at least one mute interval upon identifying at least one packet loss among the plurality of packets. According to an embodiment, the electronic device 101 may identify a mute interval in the data sequence as shown in Table 2.

**[Table 2]**

| |
|---|
| [UMTS AMR WB DEC PKT] CNT(1545) RxType(5) Mode(8) DF E3 E0 3D 00 18 00 00 00 // SID update |
| [UMTS AMR WB DEC PKT] CNT(1546) RxType(7) Mode(8) 00 00 00 00 00 00 00 00 00 |
| [UMTS AMR WB DEC PKT] CNT(1547) RxType(7) Mode(8) 00 00 00 00 00 00 00 00 00 |
| [UMTS AMR WB DEC PKT] CNT(1548) RxType(7) Mode(8) 00 00 00 00 00 00 00 00 00 |
| [UMTS AMR WB DEC PKT] CNT(1549) RxType(7) Mode(8) 00 00 00 00 00 00 00 00 00 |
| [UMTS AMR WB DEC PKT] CNT(1550) RxType(7) Mode(8) 00 00 00 00 00 00 00 00 00 |
| [UMTS AMR WB DEC PKT] CNT(1551) RxType(7) Mode(8) 00 00 00 00 00 00 00 00 00 |
| [UMTS AMR WB DEC PKT] CNT(1552) RxType(7) Mode(8) 00 00 00 00 00 00 00 00 00 |
| [UMTS AMR WB DEC PKT] CNT(1553) RxType(5) Mode(8) DF E3 E0 3D 00 18 00 00 00 // SID update |

According to an embodiment, referring to Table 2, based on identifying packet loss of a packet including audio data corresponding to "00" from packet number 1546 to packet number 1552, the electronic device 101 may identify a mute interval. For example, the electronic device 101 may identify the mute interval from a time corresponding to packet number 1546 to a time corresponding to packet number 1552. According to an embodiment, based on identifying the at least one mute interval, the electronic device 101, in operation 605, may store input audio upon receiving a first record flag from the external electronic device while performing the call. Based on receiving the first record flag from the external electronic device, the electronic device 101 may identify that the external electronic device is located in a relatively weak electric field. Based on receiving the first record flag, the electronic device 101 may identify that loss of at least a portion of RTP packets transmitted to the external electronic device may occur. According to an embodiment, based on receiving the first record flag, the electronic device 101 may identify that the external electronic device is storing input audio of the external electronic device. Considering that a user of the external electronic device may experience call mute, the electronic device 101 may store input audio of the electronic device 101. According to an embodiment, those skilled in the art may easily understand that the electronic device 101 may initiate storing input audio of the electronic device 101 based on a user input that causes establishing a call connection or attempting a call connection according to a configuration of a call application. According to an embodiment, based on receiving a second record flag from the external electronic device, the electronic device 101 may stop storing the input audio.

According to an embodiment, based on storing the input audio after receiving the first record flag, the electronic device 101, in operation 607, may transmit, to the external electronic device, a request for information included in the at least one mute interval upon termination of the call. The electronic device 101 may identify the mute interval by identifying the packet loss as shown in Table 2. The electronic device 101 may be in a state of not receiving information corresponding to the mute interval due to the packet loss. Based on receiving the first record flag, the electronic device 101 may identify that the external electronic device is storing at least the voice of the user of the external electronic device among the content of the call. Based on the termination of the call, the electronic device 101 may transmit, to the external electronic device, a request for information included in the mute interval.

According to an embodiment, based on transmitting of the request for the information included in the at least one mute interval to the external electronic device, the electronic device 101 may receive a response including first information corresponding to the at least one mute interval in operation 609. The electronic device 101 may receive, from the external electronic device, meaningful information of missing voice included in the mute interval corresponding to the packet loss. The electronic device 101 may identify that the external electronic device stores at least a portion of the content of the call based on receiving the first record flag, and may request, from the external electronic device, information corresponding to the mute interval based on identifying the packet loss. The electronic device 101 may improve the quality of a call service based on receiving, from the external electronic device, the meaningful information included in the mute interval.

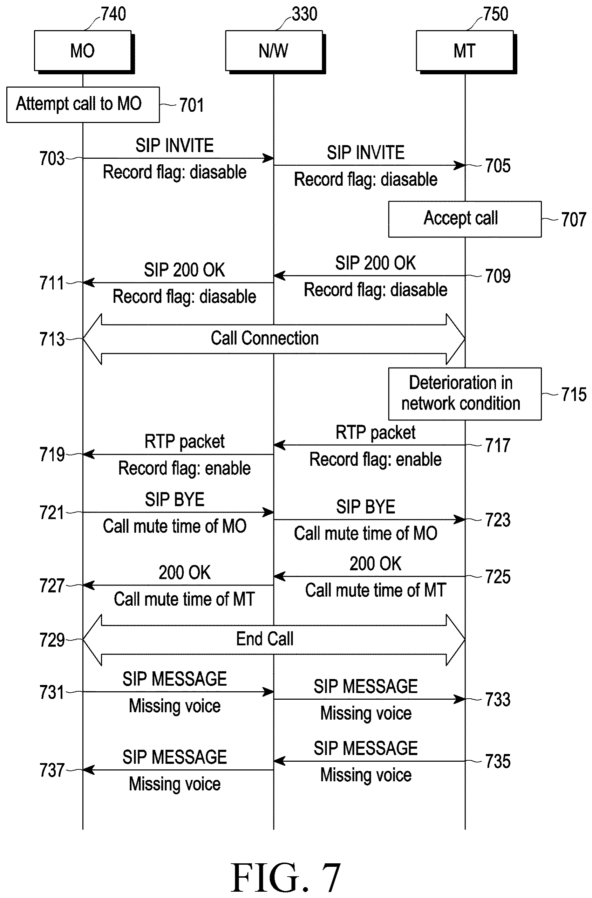

FIG. 7 is a flowchart illustrating an operation method of an electronic device according to an embodiment.

According to an embodiment, a mobile originating (MO) device 740 (e.g., electronic device 101) may attempt a call to a mobile terminating (MT) device 750 (e.g., at least one of the electronic device 102, the electronic device 104, or the server 108), in operation 701. Although FIG. 7 assumes that the mobile originating (MO) device 740 is the electronic device 101, those skilled in the art may understand that the case in which the mobile terminating (MT) device 750 is the electronic device 101 is also applicable. The MO device 740 may transmit, to the IMS network 330, an invite message (e.g., SIP INVITE) associated with the MT device 750 in operation 703. For example, the electronic device 101 may transmit an invite message including a second record flag. For example, the IMS network 330 may transmit the invite message to the MT device 750 in operation 705. The MT device 750 may accept a call from the MO device 740 in operation 707. The MT device 750 may transmit a reply message (e.g., SIP 200 OK) to the IMS network 330 in operation 709. The reply message may include, for example, the second record flag. The IMS network 330 may transmit the reply message to the MO device 740 in operation 711. According to an embodiment, in operation 713, a call (VoLTE call or VoNR call) may be established between the MO device 740 and the MT device 750.

According to an embodiment, the MT device 750 may identify deterioration of a network condition in operation 715. For example, the MT device 750 may identify that the network condition is poor based on identifying that the strength of a received signal associated with the call is less than a threshold value. In operation 717, the MT device 750 may transmit an RTP packet to the IMS network 330. For example, a header of the RTP packet may include a first record flag. The IMS network 330 may transmit the RTP packet to the MO device 740 in operation 719. The MO device 740 may transmit a bye message (e.g., SIP BYE) to the IMS network 330 in operation 721. For example, the bye message may include information corresponding to at least one mute interval corresponding to call mute that has occurred in the MO device 740. The IMS network 330 may transmit the bye message to the MT device 750 in operation 723. In operation 725, the MT device 750 may transmit a 200 OK message to the IMS network 330. For example, the 200 OK message may include information corresponding to at least one mute interval corresponding to call mute that has occurred in the MT device 750. The IMS network 330 may transmit the 200 OK message to the MO device 740 in operation 727. The MO device 740 and the MT device 750 may terminate the call and identify information (e.g., meaningful information of missing voice) corresponding to the received mute interval in operation 729. In operation 731, the MO device 740 may transmit an SIP message to the IMS network 330. For example, the SIP message may include information corresponding to the mute interval received from the MT device 750. The IMS network 330 may transmit the SIP message to the MT device 750 in operation 733. In operation 735, the MT device 750 may transmit an SIP message to the IMS network 330. For example, the SIP message may include information corresponding to the mute interval received from the MO device 740. In operation 737, the IMS network 330 may transmit the SIP message to the MO device 740. The MO device 740 and the MT device 750 may identify the mute intervals respectively according to the method of FIG. 7, may identify information corresponding to the received mute intervals, and may exchange the identified information.

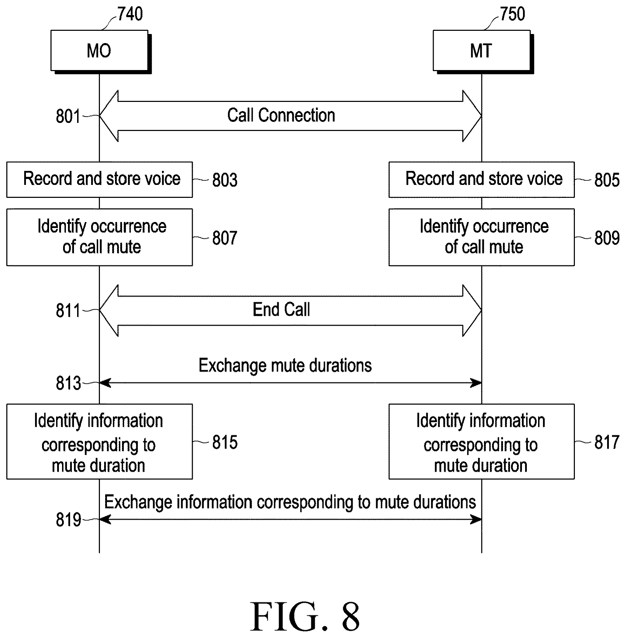

FIG. 8 is a flowchart illustrating an operation method of an electronic device according to an embodiment. In FIG. 8, a description that overlaps with the description of FIG. 7 may not be repeated.

According to an embodiment, the MO device 740 and the MT device 750 may establish a call connection in operation 801. As described with reference to FIG. 7, the MO device 740 and the MT device 750 may establish a call connection via an IMS network (e.g., IMS network 330), and the description associated with operation of the IMS network may not be repeated in FIG. 8 for ease of description. According to an embodiment, the MO device 740 and the MT device 750 may record and store input audio, respectively, in operation 803 and operation 805. The MO device 740 and the MT device 750 may start (or initiate) recording of audio based on establishing a call. According to an embodiment, the MO device 740 and the MT device 750 may identify call mute, respectively, in operation 807 and operation 809. For example, based on identifying packet loss among a plurality of received RTP packets, the MO device 740 and the MT device 750 may identify occurrence of call mute, and may identify mute intervals corresponding to the call mute. The MO device 740 and the MT device 750 may terminate the call in operation 811. The MO device 740 and the MT device 750 may exchange the identified mute intervals in operation 813. The MO device 740 and the MT device 750 may identify information corresponding to the received mute intervals in operation 815 and 817. The MO device 740 and the MT device 750 may exchange the identified information corresponding to the mute intervals in operation 819.

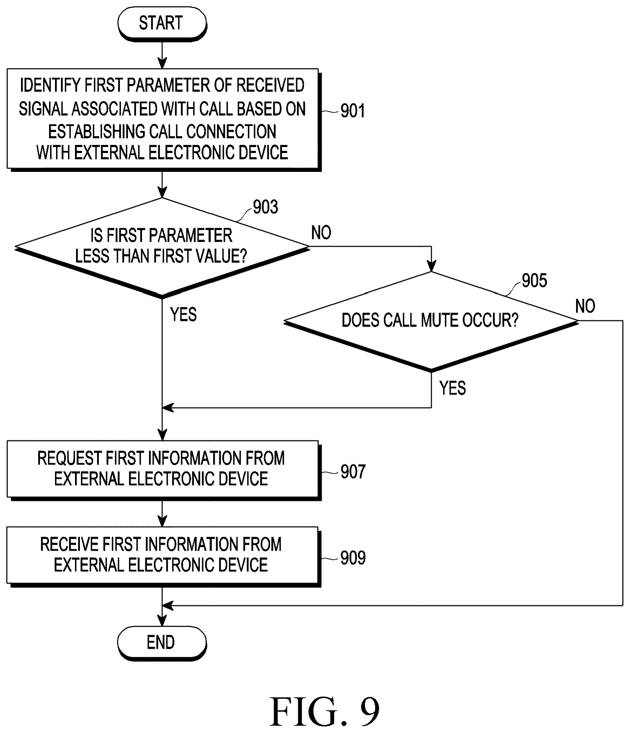

FIG. 9 is a flowchart illustrating an operation method of an electronic device according to an embodiment. In FIG. 9, a description that overlaps with the description of FIG. 4 may not be repeated.

According to an embodiment, based on establishing a call connection with an external electronic device (e.g., at least one of the electronic device 102, the electronic device 104, or the server 108), an electronic device (e.g., electronic device 101) may identify a first parameter of a received signal associated with a call in operation 901. According to an embodiment, the external electronic device may be an MT device (e.g., MT device 750) that provides an automatic reply service. In operation 903, the electronic device 101 may identify whether the first parameter of the received signal is less than a first value. The electronic device 101 may identify that a network condition is poor based on identifying that the first parameter of the received signal is less than the first value. Based on identifying that the first parameter of the received signal is greater than or equal to the first value (No in operation 903), the electronic device 101 may identify whether call mute occurs while performing the call in operation 905. Based on identifying, for example, whether packet loss occurs among the received packets, the electronic device 101 may identify the occurrence of call mute. Based on identifying the occurrence of the call mute (Yes in operation 905), the electronic device 101 may request first information from the external electronic device in operation 907. According to an embodiment, based on identifying that the first parameter is less than the first value (Yes in operation 903), the electronic device 101 may request the first information from the external electronic device. For example, the first information may be information associated with the automatic reply service via an MMS and/or SMS. As a response to the request, the electronic device 101 may receive the first information from the external electronic device in operation 909. According to an embodiment, even when the electronic device 101 performs a call with an MT device (e.g., MT device 750) associated with an automatic reply service, the electronic device 101 may request information associated with the automatic reply service from the MT device based on identifying whether the network condition is good, and may receive the information.

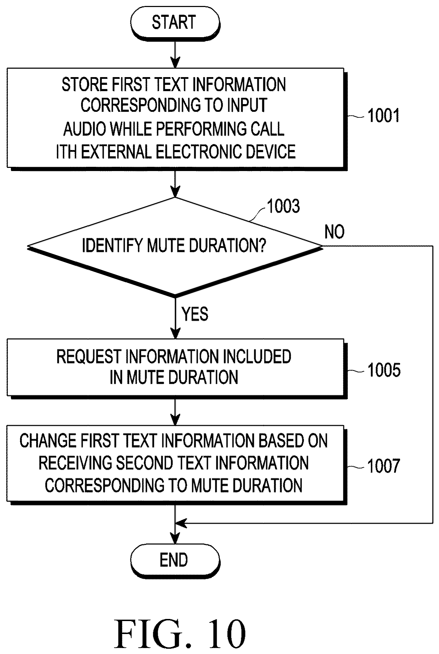

FIG. 10 is a flowchart illustrating an operation method of an electronic device according to an embodiment.

According to an embodiment, an electronic device (e.g., electronic device 101) may store first text information corresponding to input audio while performing a call with an external electronic device (e.g., at least one of the electronic device 102, the electronic device 104, or the server 108) in operation 1001. According to an embodiment, the electronic device 101 may identify text information corresponding to input audio while performing the call. For example, based on inputting the input audio to a trained speech-to-text (STT) model, the electronic device 101 may identify the text information, and a method of identifying text information corresponding to audio information from the audio information is not limited to the above-described example. The electronic device 101 may store, as first text information, text information corresponding to audio input while performing the call. According to an embodiment, the electronic device 101 may identify whether at least one mute interval occurs while performing the call in operation 1003. For example, based on identifying whether packet loss occurs among the received packets, the electronic device 101 may identify occurrence of a mute interval. According to an embodiment, based on identifying the occurrence of the mute interval (Yes in operation 1003), the electronic device 101 may request information included in the mute interval in operation 1005. For example, the electronic device 101 may request, from the external electronic device, a text file corresponding to the mute interval. According to an embodiment, based on receiving second text information corresponding to the mute interval, the electronic device 101 may change the first text information in operation 1007. For example, based on receiving the text file corresponding to the mute interval, the electronic device 101 may replace, with the second text information, at least a portion corresponding to the mute interval in the first text information. Based on identifying the text information corresponding to missing voice due to call mute, the electronic device 101 may change a call description.

According to an embodiment, the electronic device 101 may include the communication circuit 190 and the at least one processor 120, 212, 214, or 260 operatively connected to the communication circuit 190. The at least one processor 120, 212, 214, or 260 may be configured to identify a first parameter of a received signal associated with a call based on establishing a call connection with an external electronic device 102, 104, or 108 via the communication circuit 190. The at least one processor 120, 212, 214, or 260 may be configured to transmit, via the communication circuit 190, a first record flag that causes the external electronic device 102, 104, or 108 to store input audio, based on identifying that the first parameter is less than a first value. The at least one processor 120, 212, 214, or 260 may be configured to store input audio while performing the call. The at least one processor 120, 212, 214, or 260 may be configured to identify first information from the stored input audio based on receiving a request for information included in at least one mute interval from the external electronic device 102, 104, or 108. The at least one processor 120, 212, 214, or 260 may be configured to transmit a response including the first information to the external electronic device 102, 104, or 108 via the communication circuit 190.

The at least one processor 120, 212, 214, or 260 may be further configured to identify at least one mute interval based on identifying at least one packet loss among a plurality of received packets, while performing the call with the external electronic device 102, 104, or 108. The at least one processor 120, 212, 214, or 260 may be further configured to transmit a request for information included in the identified at least one mute interval to the external electronic device 102, 104, or 108 via the communication circuit 190 based on termination of the call. The at least one processor 120, 212, 214, or 260 may be further configured to receive a response including information corresponding to the identified at least one mute interval from the external electronic device 102, 104, or 108.According to an embodiment, the at least one processor 120, 212, 214, or 260 may be further configured to transmit, via the communication circuit 190, a second record flag that causes the external electronic device 102, 104, or 108 to stop storing input audio based on identifying that the first parameter is greater than or equal to the first value.

According to an embodiment, the at least one processor 120, 212, 214, or 260 may be configured to start storing the input audio based on identifying that the first parameter is less than the first value, as at least a portion of the operation of storing the input audio while performing the call.

According to an embodiment, the first parameter may include at least one of an RSSI, SINR, or RSRP corresponding to the received signal.

According to an embodiment, the at least one processor 120, 212, 214, or 260 may be configured to start storing input audio based on the establishing of the call connection with the external electronic device 102, 104, or 108, as at least a portion of the operation of storing the input audio while performing the call.

According to an embodiment, the at least one processor 120, 212, 214, or 260 may be configured to identify first information that satisfies a first condition from at least a portion of audio information that corresponds to the at least one mute interval among the stored input audio, as at least a portion of the operation of identifying of the first information from the stored input audio based on the receiving of the request for the information included in the at least one mute interval from the external electronic device 102, 104, or 108.

According to an embodiment, the at least one processor 120, 212, 214, or 260 may be configured to transmit, to the external electronic device 102, 104, or 108, the response including the first information provided in at least one of an audio format or a text format, as at least a portion of the operation of transmitting of the response including the first information to the external electronic device 102, 104, or108 via the communication circuit 190. According to an embodiment, the first condition may include that the first information is data designated as a keyword.

According to an embodiment, the at least one processor 120, 212, 214, or 260 may be further configured to store first text information corresponding to input audio while performing the call with the external electronic device 102, 104, or 108. The at least one processor 120, 212, 214, or 260 may be further configured to request, from the external electronic device 102, 104, or 108, information included in the at least one mute interval based on identifying at least one mute interval while performing the call. The at least one processor 120, 212, 214, or 260 may be further configured to change the stored first text information based on receiving second text information corresponding to the at least one mute interval from the external electronic device 102, 104, 108.

According to an embodiment, the electronic device 101 may include the communication circuit 190 and the at least one processor 120, 212, 214, or 260 operatively connected to the communication circuit 190. The at least one processor 120, 212, 214, or 260 may be configured to identify a plurality of packets received while performing a call with an external electronic device 102, 104, or 108 based on establishing a call connection with the external electronic device 102, 104, or 108 via the communication circuit 190. The at least one processor 120, 212, 214, or 260 may be configured to identify at least one mute interval based on identifying at least one packet loss among the plurality of packets. The at least one processor 120, 212, 214, or 260 may be configured to store input audio based on receiving a first record flag from the external electronic device 102, 104, or 108 while performing the call. The at least one processor 120, 212, 214, or 260 may be configured to transmit a request for information included in the at least one mute interval to the external electronic device 102, 104, or 108 via the communication circuit 190 based on termination of the call after the first record flag is received. The at least one processor 120, 212, 214, or 260 may be configured to receive a response including first information corresponding to the at least one mute interval from the external electronic device 102, 104, or 108.

According to an embodiment, an operation method of the electronic device 101 may include an operation of identifying a first parameter of a received signal associated with a call based on establishing a call connection with the external electronic device 102, 104, or 108 via the communication circuit 190 of the electronic device 101. The operation method of the electronic device 101 may include an operation of transmitting, via the communication circuit 190, a first record flag that causes the external electronic device 102, 104, or 108 to store input audio based on identifying that the first parameter is less than a first value. The operation method of the electronic device 101 may include an operation of storing input audio while performing the call. The operation method of the electronic device 101 may include an operation of identifying first information from the stored input audio based on receiving a request for information included in at least one mute interval from the external electronic device 102, 104, or 108. The operation method of the electronic device 101 may include an operation of transmitting a response including the first information to the external electronic device 102, 104, or 108 via the communication circuit 190.

According to an embodiment, the operation method of the electronic device 101 may further include an operation of identifying at least one mute interval based on identifying at least one packet loss among a plurality of received packets, while performing the call with the external electronic device 102, 104, or 108. According to an embodiment, the operation method of the electronic device 101 may further include an operation of transmitting a request for information included in the at least one mute interval to the external electronic device 102, 104, 108 via the communication circuit 190, based on termination of the call. According to an embodiment, the operation method of the electronic device 101 may further include an operation of receiving, from the external electronic device 102, 104, or 108, a response including first information corresponding to the at least one mute interval.

According to an embodiment, the operation method of the electronic device 101 may further include an operation of transmitting, via the communication circuit 190, a second record flag that causes the external electronic device 102, 104, or 108 to stop storing input audio based on identifying that the first parameter is greater than or equal to the first value.

According to an embodiment, in the operation method of the electronic device 101, the operation of storing the input audio while performing the call may include an operation of starting storing of the input audio based on identifying that the first parameter is less than the first value.

According to an embodiment, in the operation method of the electronic device 101, the first parameter may include at least one of an RSSI, SINR, or RSRP corresponding to the received signal.

According to an embodiment, in the operation method of the electronic device 101, the operation of storing the input audio while performing the call may include an operation of starting storing of the input audio based on establishing a call connection with the external electronic device 102, 104, or 108.

According to an embodiment, in the operation method of the electronic device 101, the operation of identifying of the first information from the stored input audio based on the receiving of the request for the information included in the at least one mute interval from the external electronic device 102, 104, or 108 may include an operation of identifying first information that satisfies a first condition from at least a portion of audio information that corresponds to the at least one mute interval among the stored input audio.

According to an embodiment, in the operation method of the electronic device 101, the operation of transmitting of the response including the first information to the external electronic device 102, 104, or 108 via the communication circuit 190 may include an operation of transmitting, to the external electronic device 102, 104, or 108, the response including the first information provided in at least one of an audio format or a text format. According to an embodiment, the first condition may include that the first information is data designated as a keyword.

According to an embodiment, the operation method of the electronic device 101 may further include an operation of storing first text information corresponding to input audio while performing the call with the external electronic device 102, 104, or 108. The operation method of the electronic device 101 may further include an operation of requesting, from the external electronic device 102, 104, or 108, information included in the at least one mute interval based on identifying at least one mute interval while performing the call. The operation method of the electronic device 101 may further include an operation of changing the stored first text information based on receiving second text information corresponding to the at least one mute interval from the external electronic device 102, 104, or 108.

According to an embodiment, the operation method of the electronic device 101 may include an operation of identifying a plurality of packets received while performing a call with an external electronic device 102, 104, or 108 based on establishing a call connection with the external electronic device 102, 104, or 108 via the communication circuit 190 of the electronic device 101. The operation method of the electronic device 101 may include an operation of identifying at least one mute interval based on based on identifying at least one packet loss among the plurality of packets. The operation method of the electronic device 101 may include an operation of store input audio based on receiving a first record flag from the external electronic device 102, 104, or 108 while performing the call. The operation method of the electronic device 101 may include an operation of transmitting a request for information included in the at least one mute interval to the external electronic device 102, 104, or 108 via the communication circuit 190 based on termination of the call after the first record flag is received. The operation method of the electronic device 101 may include an operation of receiving a response including first information corresponding to the at least one mute interval from the external electronic device 102, 104, or 108.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
communication circuitry (190); and
at least one processor (120, 212, 214, 260) operatively connected to the communication circuitry (190),
wherein the at least one processor (120, 212, 214, 260) is configured to:
based on establishing a call connection with an external electronic device (102, 104, 108) via the communication circuitry (190), identify a first parameter of a received signal associated with a call;
based on identifying that the first parameter is less than a first value, transmit, via the communication circuitry (190), a first record flag that causes the external electronic device (102, 104, 108) to store an input audio;
store an input audio while performing the call;
based on receiving a request for information included in at least one mute interval from the external electronic device (102, 104, 108), identify first information from the stored input audio; and
transmit a response including the first information to the external electronic device (102, 104, 108) via the communication circuitry (190).

2. The electronic device (101) of claim 1, wherein the at least one processor (120, 212, 214, 260) is further configured to:
identify at least one mute interval, based on identifying loss of at least one packet among a plurality of received packets, while performing the call with the external electronic device (102, 104, 108);
based on termination of the call, transmit a request for information included in the identified at least one mute interval to the external electronic device (102, 104, 108) via the communication circuitry (190); and
receive a response including information corresponding to the identified at least one mute interval from the external electronic device (102, 104, 108).

3. The electronic device (101) of any one of claims 1 and 2, wherein the at least one processor (120, 212, 214, 260) is further configured to, based on identifying that the first parameter is greater than or equal to the first value, transmit, via the communication circuitry (190), a second record flag that causes the external electronic device (102, 104, 108) to stop storing the input audio.

4. The electronic device (101) of any one of claims 1 to 3, wherein the at least one processor (120, 212, 214, 260) is configured to start storing the input audio, based on identifying that the first parameter is less than the first value, as at least a part of the storing of the input audio while performing the call.

5. The electronic device (101) of any one of claims 1 to 4, wherein the first parameter comprises at least one of an RSSI, SINR, or RSRP corresponding to the received signal.

6. The electronic device (101) of any one of claims 1 to 5, wherein the at least one processor (120, 212, 214, 260) is configured to start storing input audio, based on the establishing of the call connection with the external electronic device (102, 104, 108), as at least a part of the storing of the input audio while performing the call.

7. The electronic device (101) of any one of claims 1 to 6, wherein the at least one processor (120, 212, 214, 260) is configured to, based on the receiving of the request for the information included in the at least one mute interval from the external electronic device (102, 104, 108), identify first information satisfying a first condition from at least a part of audio information corresponding to the at least one mute interval in the stored input audio, as at least a part of the identifying of the first information from the stored input audio.

8. The electronic device (101) of any one of claims 1 to 7, wherein the at least one processor (120, 212, 214, 260) is configured to transmit, to the external electronic device (102, 104, 108), the response including the first information in at least one of an audio format or a text format, as at least a part of the transmitting of the response including the first information to the external electronic device (102, 104, 108) via the communication circuitry (190), and
wherein the first condition comprises a condition that the first information is data designated as a keyword.

9. The electronic device (101) of any one of claims 1 to 8, wherein the at least one processor (120, 212, 214, 260) is further configured to:
store first text information corresponding to input audio while performing the call with the external electronic device (102, 104, 108);
based on identifying at least one mute interval while performing the call, request information included in the at least one mute interval from the external electronic device (102, 104, 108); and
based on receiving second text information corresponding to the at least one mute interval from the external electronic device (102, 104, 108), change the stored first text information.

10. An electronic device (101) comprising:
communication circuitry (190); and
at least one processor (120, 212, 214, 260) operatively connected to the communication circuitry (190),
wherein the at least one processor (120, 212, 214, 260) is configured to:
based on establishing a call connection with the external electronic device (102, 104, 108) via the communication circuitry (190), identify a plurality of packets received while performing a call with an external electronic device (102, 104, 108);
based on identifying loss of at least one packet among the plurality of packets, identify at least one mute interval;
based on receiving a first record flag from the external electronic device (102, 104, 108) while performing the call, store an input audio;
based on termination of the call after the first record flag is received, transmit a request for information included in the at least one mute interval to the external electronic device (102, 104, 108) via the communication circuitry (190); and
receive a response including first information corresponding to the at least one mute interval from the external electronic device (102, 104, 108).

11. An operation method of an electronic device (101), the method comprising:
based on establishing a call connection with an external electronic device (102, 104, 108) via a communication circuitry (190) of the electronic device (101), identifying a first parameter of a received signal associated with a call;
based on identifying that the first parameter is less than a first value, transmitting, via the communication circuitry (190), a first record flag that causes the external electronic device (102, 104, 108) to store an input audio;
storing an input audio while performing the call;
based on receiving a request for information included in at least one mute interval from the external electronic device (102, 104, 108), identifying first information from the stored input audio; and
transmitting a response including the first information to the external electronic device (102, 104, 108) via the communication circuitry (190).

12. The method of claim 11, further comprising:
identifying at least one mute interval, based on identifying loss of at least one packet among a plurality of received packets, while performing the call with the external electronic device (102, 104, 108),
based on termination of the call, transmitting a request for information included in the at least one mute interval to the external electronic device (102, 104, 108) via the communication circuitry (190); and
receiving a response including first information corresponding to the at least one mute interval from the external electronic device (102, 104, 108).

13. The method of any one of claims 11 and 12, further comprising, based on identifying that the first parameter is greater than or equal to the first value, transmitting, via the communication circuitry (190), a second record flag that causes the external electronic device (102, 104, 108) to stop storing the input audio.

14. The method of any one of claims 11 to 13, wherein the storing of the input audio while performing the call comprises starting storing of the input audio, based on identifying that the first parameter is less than the first value.

15. The method of any one of claims 11 to 14, wherein the first parameter comprises at least one of an RSSI, SINR, or RSRP corresponding to the received signal.
